# EUROPEAN PATENT APPLICATION

(11) **EP 4 207 031 A1**
(43) Date of publication of application: **05.07.2023**
(21) Application number: 21872633.9
(22) Date of filing: 28.09.2021
(51) Int. Cl.: G06Q 30/02

(54) **INFORMATION PROCESSING DEVICE, INFORMATION PROCESSING METHOD, AND PROGRAM**

(30) Priority: 28.09.2020 JP 2020162023
(71) Applicant: Avatarin Inc., Tokyo 103-0022 (JP)
(72) Inventor: FUKABORI, Akira, Tokyo 103-0022 (JP); KAJITANI, Kevin, Tokyo 103-0022 (JP)
(74) Representative: D Young & Co LLP
(86) International application number: PCT/JP2021/035598
(87) International publication number: WO 2022/065508

(57) **Abstract**

Provided is technology for advertisement of merchandise, utilizing a robot. An advertisement server 10 includes a storage unit 11 that stores a plurality of advertisements, an acquisition unit 12 that acquires position-related information relating to a position of a robot that is not fixed, a selecting unit 13 that selects, from a plurality of the advertisements, an advertisement to be displayed, on the basis of the position-related information, and a display control unit 14 that performs control to display the advertisement that is selected, at a terminal device used by a user operating the robot.

## Description

### Cross References to Related Applications

This application claims the benefit of Japanese Patent Application No. 2020-162023, filed on September 28, 2020, which is hereby incorporated by reference herein in its entirety.

### Technical Field

The present invention relates to an information processing device, an information processing method, and a program.

### Background Art

In recent years, videoconferencing systems that use the Internet have come into widespread use, and there are known robots that enable users at remote locations to not only talk face to face, but also to operate orientations and positions of cameras (e.g., telepresence robots). Patent Document 1 describes a camera-equipped moving body (telepresence robot) that provides users at remote locations with images that are shot.

### Citation List

### Patent Document

Patent Document 1: Patent Publication JP-A-2019-062308

### Summary

Utilization of robots is anticipated in various fields. For example, in a conceivable arrangement, a robot could be installed in shops such as in a shopping mall or the like, and a user who lives at a remote location could operate the robot to use the robot as his/her other self to view and purchase merchandise of that shop without having to directly visit the shop.

There are requests from shops in which robots are installed, for effectively advertising merchandise in the shops to users who remotely visit the shops using the robots, but no technology that satisfies such requests has been proposed as of yet.

The present invention has been made in light of the foregoing situation, and it is an object thereof to propose advertising technology for merchandise utilizing a robot.

An information processing device according to an aspect of the present disclosure includes: a storage unit that stores a plurality of advertisements; a first acquisition unit that acquires position-related information relating to a position of a robot that is not fixed; a selecting unit that selects, from a plurality of the advertisements, an advertisement to be displayed, on the basis of the position-related information; and a display control unit that performs control to display the advertisement that is selected, at a terminal device used by a user operating the robot.

An information processing method according to an aspect of the present disclosure includes the steps of: a computer including a storage unit that stores a plurality of advertisements acquiring position-related information relating to a position of a robot that is not fixed; selecting, from a plurality of the advertisements, an advertisement to be displayed, on the basis of the position-related information; and performing control of displaying the advertisement that is selected, at a terminal device used by a user operating the robot.

A program according to an aspect of the present disclosure causes a computer including a storage unit that stores a plurality of advertisements to execute the steps of: acquiring position-related information relating to a position of a robot that is not fixed; selecting, from a plurality of the advertisements, an advertisement to be displayed, on the basis of the position-related information; and performing control of displaying the advertisement that is selected, at a terminal device used by a user operating the robot.

### Advantageous Effects of Invention

According to the present invention, advertising technology for merchandise utilizing a robot can be provided.

### Brief Description of Drawings

Fig. 1 is a diagram illustrating a network configuration of an advertising system according to the present embodiment.
Fig. 2 is a conceptual diagram for describing an overview of the advertising system.
Fig. 3 is a diagram exemplifying an advertisement screen displayed on a terminal device of a user.
Fig. 4 is a block diagram illustrating a functional configuration of an advertisement server.
Fig. 5 is a diagram exemplifying user information.
Fig. 6 is a diagram exemplifying an advertisement.
Fig. 7 is a diagram illustrating a hardware configuration of a computer implemented in the advertisement server and the terminal device.
Fig. 8 is a diagram illustrating a hardware configuration of a computer implemented in a robot.
Fig. 9 is a flowchart showing an example of processing executed by the advertisement server.
Fig. 10 is a block diagram illustrating a functional configuration of an advertisement server according to a modification.

### Description of Embodiments

**An** embodiment of the present invention will be described below. Note that the following embodiment is an exemplification for describing the present invention, and is not intended to limit the present invention to this embodiment alone. Also, various modifications can be made to the present invention without departing from the essence thereof. Further, one skilled in the art will be capable of employing embodiments in which the elements described below are substituted with equivalent items, and such embodiments are encompassed by the scope of the present invention. Also, description is made below by way of an example of an embodiment in which the present invention is realized using an information processing device (or a computer) to facilitate understanding, but the present invention is not limited thereto.

### A. Present Embodiment

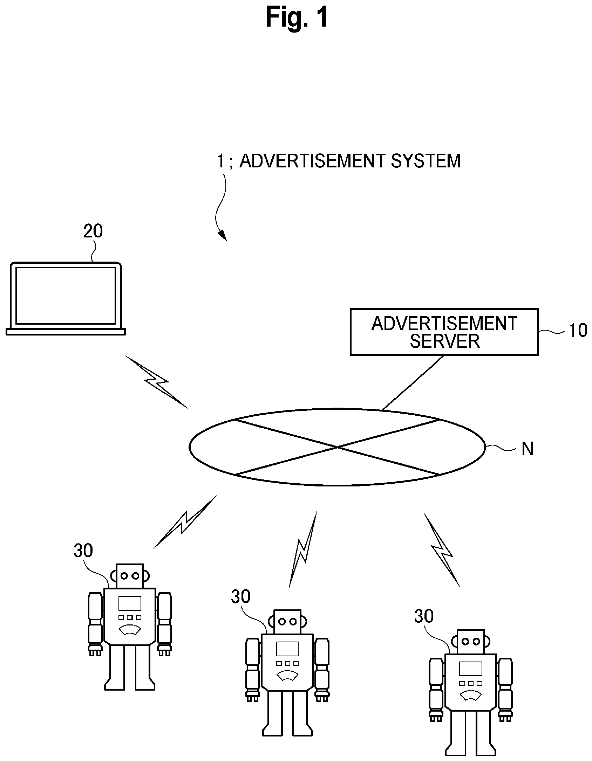

Fig. 1 is a diagram illustrating a network configuration of an advertisement system 1 according to the present embodiment. The advertisement system 1 includes a plurality of robots 30 that are not fixed, a terminal device 20 that is capable of operating the robots 30, and an advertisement server 10 that provides advertisements to the terminal device 20. The robots 30, the terminal device 20, and the advertisement server 10 are capable of communicating with each other via a network N. Note that although three robots 30, one terminal device 20, and one advertisement server 10 are exemplified in Fig. 1, the number of each of the robots 30, the terminal device 20, and the advertisement server 10, is optional.

One or a plurality of portions of the network N may be a wired network or a wireless network. The network N is not limited, and examples thereof include an ad hoc network (Ad Hoc Network), an intranet, an extranet, a virtual private network (Virtual Private Network: VPN), a local area network (Local Area Network: LAN), a wireless LAN (Wireless LAN: WLAN), a wide area network (Wide Area Network: WAN), a wireless WAN (Wireless WAN: WWAN), a metropolitan area network (Metropolitan Area Network: MAN), a part of the Internet, a part of a public switched telephone network (Public Switched Telephone Network: PSTN), a mobile phone network, ISDNs (Integrated Service Digital Networks) wireless LANs, LTE (Long Term Evolution), CDMA (Code Division Multiple Access), near field communication such as Bluetooth (Bluetooth (a registered trademark)), satellite communication, and so forth, or a combination of two or more thereof.

### <Overview of Advertisement System 1>

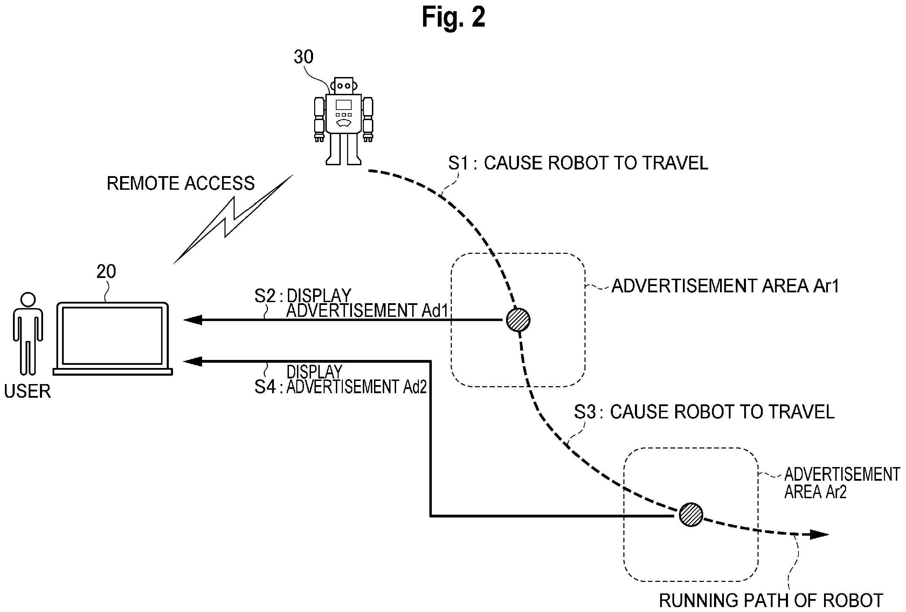

Fig. 2 is a conceptual diagram for describing an overview of the advertisement system 1.

The robot 30 is installed in a shopping mall, for example. A user remotely accesses the robot 30 installed in the shopping mall by operating the terminal device 20, and visits shops in the shopping mall. The user causes the robot 30 to travel toward a favorite sporting goods shop, for example, by operating the terminal device 20 (step S1). Now, the sporting goods shop is located in a particular advertisement area (e.g., south floor or the like) Ar1 of the shopping mall. When the robot 30 enters the advertisement area Ar1, the advertisement server 10 acquires an advertisement (e.g., an advertisement relating to various types of sporting goods, or the like) Ad1, in accordance with the position of the robot 30, from a database (described later), which is then displayed on the terminal device 20 of the user (step S2).

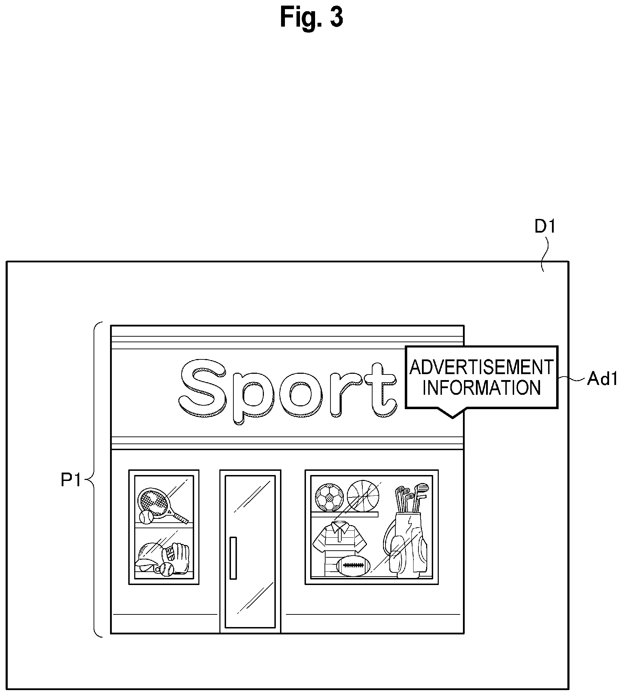

Fig. 3 is a diagram exemplifying an advertisement screen D1 displayed on the terminal device 20 of the user.

The advertisement screen D1 displays, along with an image (sporting goods shop or the like) P1 shot by a camera of the robot 30, with the advertisement Ad1 relating to sports superimposed thereupon.

Detailed descriptive information of recommended merchandise that the sporting goods shop handles, for example, is included in the advertisement Ad1. In a case in which the recommended merchandise is basketball shoes, as an example, descriptive information such as the functions, material, size, color, weight, price, stock availability, and so forth thereof, is included in the advertisement Ad1.

Providing users with the advertisement Ad1 enables a greater number of users to purchase (or consider purchasing) the merchandise that the shop handles. Note that in the present specification, "advertisement" means activities of conveying information regarding merchandise, services, and further ideas, or media for conveying information or contents conveyed.

Thereafter, the user causes the robot 30 to travel toward a favorite pet shop by operating the terminal device 20 (step S3). Now, the pet shop is located in a particular advertisement area (e.g., east floor or the like) Ar2 of the shopping mall. When the robot 30 enters the advertisement area Ar2, the advertisement server 10 acquires an advertisement (e.g., an advertisement relating to pet-related goods, or the like) Ad2, in accordance with the position of the robot 30, from the database (described later), which is then displayed on the terminal device 20 of the user (step S4).

According to this advertisement system 1, by accessing the robot 30 installed in the shopping mall or the like, advertisements are displayed on the terminal device 20 of the user who is remotely visiting, in accordance with the position of the robot 30. The user can acquire advertisements for merchandise or the like that he/she likes, extremely easily and quickly, in accordance with the position of the robot 30 that is the other self of the user. Hereinafter, the configurations of the advertisement server 10, the terminal device 20, and the robot 30 will be described.

### <Configuration>

The advertisement server 10 is a device that controls display of advertisements on the terminal device 20 of the user operating the robot 30. The advertisement server 10 is made up of an information processing device such as a server computer or the like. The advertisement server 10 may be made up of one information processing device, or may be made up of a plurality of information processing devices, such as in cloud computing, edge computing, and so forth, for example. Note that detailed functions of the advertisement server 10 will be described later.

The terminal device 20 is an information processing device used by the user to operate the robot 30, and so forth. The terminal device 20 has an input unit that accepts input of instructions from the user, a display unit that displays images shot by the camera of the robot 30 that the user is operating, and advertisements and so forth transmitted from the advertisement server 10, and a communication unit that exchanges various types of information with the advertisement server 10 and the robot 30 via the network N.

The terminal device 20 is a general-purpose or dedicated information processing device, such as for example, a smartphone, a tablet terminal, a PDA (Personal Digital Assistants), a personal computer, a head-mounted display, an application-specific operating system, and so forth. The terminal device 20 may be made up of an information processing device that is dedicated for operating the robot 30.

The robot 30 is made up of a telepresence robot or an avatar robot, for example, and may have a traveling unit such as wheels or the like. The robot 30 has an image and audio input unit including a camera, a microphone, and so forth, a driving unit which can be remotely operated by the terminal device 20, and a communication unit for exchanging various types of data with the advertisement server 10 and the terminal device 20 via the network N. The robot 30 is installed in various locations, with one or a plurality of thereof being installed in the shopping mall or the like, for example. These robots 30 are robots that are not fixed, and the term not fixed includes cases in which the robot 30 is of a traveling-type having a driving unit for traveling, such as wheels or the like, and a case of being a worn-type that can be worn by a person, has a driving unit for performing actions, such as a manipulator or the like.

A traveling-type robot is described in Patent Document 1, for example. A traveling unit of a traveling-type robot includes those that run by one wheel, two wheels, or a plurality of wheels, those that run by a continuous track, those that run over rails, those that travel by leaping, those that perform bipedal ambulation, quadrupedal ambulation, or multipedal ambulation, those that navigate over water or underwater by a screw propeller, and those that fly by a propeller. A worn-type robot is disclosed in, for example, MHD Yamen Saraiji, Tomoya Sasaki, Reo Matsumura, Kouta Minamizawa and Masahiko Inami, "Fusion: full body surrogacy for collaborative communication," Proceeding SIGGRAPH '18 ACM SIGGRAPH 2018 Emerging Technologies Article No. 7. Further, the robot 30 includes being vehicles or heavy equipment capable of automated traveling or semi-automated traveling, or being drones or aircraft. Also, the robot 30 includes robots that are installed in sports stadiums or the like, had have a camera capable of traveling along a rail. Also, the robot 30 includes satellite-type robots that are launched into space, which are robots that are capable of attitude control and control of shooting orientation of a camera.

The robot 30 performs actions on the basis of instructions from the terminal device 20 regarding which user authentication is successful. The user authentication here may be performed by known means, and information for user authentication may be registered in advance.

### (Functional Configuration of Advertisement Server 10)

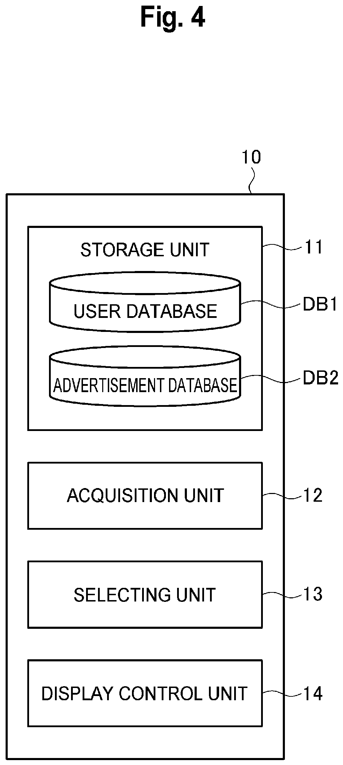

Fig. 4 is a block diagram illustrating a functional configuration of the advertisement server 10.

The advertisement server 10 has, as primary functional configurations, a storage unit 11, an acquisition unit 12, a selecting unit 13, and a display control unit 14. The functions that the advertisement server 10 has are realized by a processor of the advertisement server 10 executing advertisement control programs and so forth that are stored in the storage unit 11. Note that the advertisement server 10 is not limited to the functions illustrated in Fig. 4, and may have functions that computers generally have, as well as other functions.

The storage unit 11 is configured including a user database DB1 and an advertisement database DB2.

User information including a user ID, user attribute information, robot operation history information, and so forth, is registered in the user database DB1, for each user.

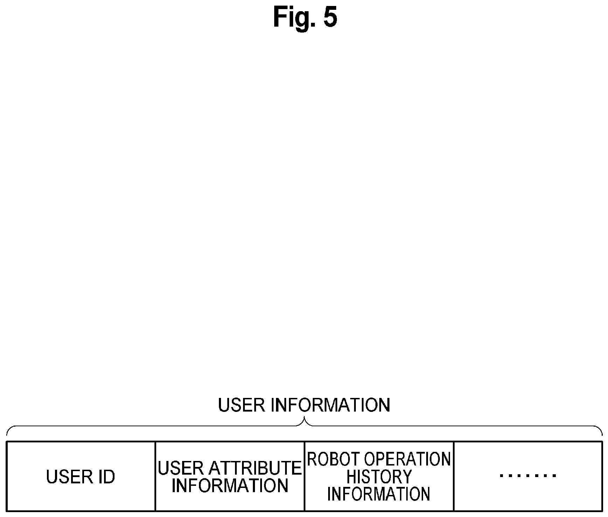

Fig. 5 is a diagram exemplifying user information.

The user ID is information for identifying each user. The user attribute information includes information relating to user attributes, such as name of the user, gender, age and family makeup, address, contact, workplace, income, hobbies, preferences, and so forth. The robot operation history information is information representing the operating history of the robot 30 over a predetermined period in the past. The robot operation history information includes information such as a robot ID for identifying the robot 30 that has been operated, date and time, and location of using the robot 30, contents realized by operating the robot 30 (e.g., purchasing particular merchandise or the like), and so forth.

A plurality of advertisements, including an advertisement ID, type information, advertisement overview information, advertisement area information, advertisement data, and so forth, are registered in the advertisement database DB2.

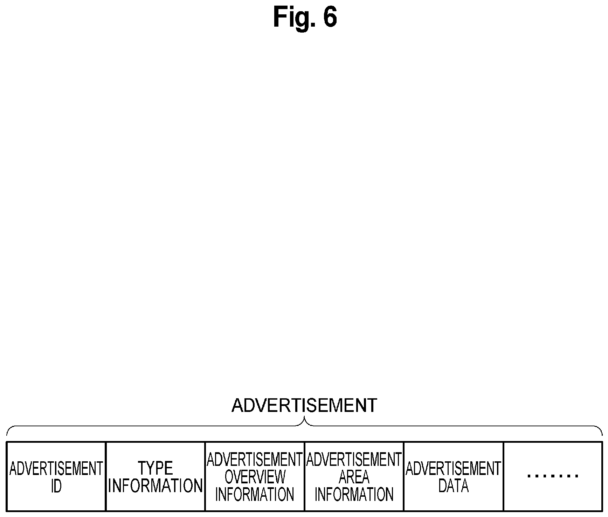

Fig. 6 is a diagram exemplifying an advertisement.

The advertisement ID is information for identifying each advertisement. The type information is information representing the type of advertisement, and in the present embodiment is still-image advertisements using still images, moving-image advertisements using moving images, and so forth.

The advertisement overview information is information representing an overview of the advertisement as an index, examples thereof including "sports-related", "pet-related", "food-related", "entertainment-related", "finance-related", and so forth.

The advertisement area information is information representing a region regarding which the advertisement is to be displayed (i.e., advertisement area).

The advertisement area information is identified by, for example, latitude/longitude, address, or the like. Upon detecting that the robot 30 has entered one of the advertisement areas, the advertisement server 10 displays an advertisement correlated with this advertisement area (e.g., an advertisement for pet-related goods) at the terminal device 20 of the user. The advertisement data is source data for displaying the advertisement.

Returning to Fig. 4, the acquisition unit 12 acquires position-related information relating to a current position of the robot 30. The position-related information of the robot 30 is expressed by, for example, latitude/longitude, optionally-set coordinate information, or some other format, and can be acquired by the advertisement server 10 performing communication with the robot 30. As an example, the acquisition unit 12 acquires the position-related information of the robot 30 by using a GPS (Global Positioning System) device or the like installed in the robot 30. Note that the position-related information of the robot 30 may be acquired by using a base station or communication equipment (e.g., a router) or the like, or by some other method (e.g., a beacon). Also, the timing of acquiring the position-related information of the robot 30 can be optionally set, and may be set to be regular (every several seconds or the like) or irregular, for example. The position-related information of the robot 30 that is acquired is stored in the storage unit 11, and also is supplied to the selecting unit 13.

The selecting unit 13 selects an advertisement to be displayed by referencing the position-related information supplied from the acquisition unit 12 and the advertisement database DB2.

To describe one example, the selecting unit 13 determines whether or not the current position of the robot 30 indicated by the position-related information has entered one of the advertisement areas stored in the advertisement database DB2 (e.g., advertisement area Ar1). Upon determining that one of the advertisement areas has been entered, the selecting unit 13 selects an advertisement correlated with that advertisement area from the advertisement database DB2, and sends the advertisement to the display control unit 14.

Note that upon detecting that the advertisement area has changed in accordance with change in the position-related information supplied from the acquisition unit 12, the selecting unit 13 selects a new advertisement in accordance with the position-related information after changing. Specifically, the selecting unit 13 switches from an advertisement correlated with an advertisement area before changing, to an advertisement correlated with an advertisement area after changing. As a result, an advertisement that is optimal for the position of the robot 30 can be displayed, such as described with reference to Fig. 2, for example.

Now, in a case in which a plurality of advertisements are correlated with the advertisement area, all of these advertisements may be selected. Just part of the advertisements may be selected instead of selecting all of the advertisements. In a case of selecting part of the advertisements, an order of priority may be set in advance. For example, the number of times of advertising each advertisement so far may be counted, with up to N (≥ 2) advertisements being selected in order from that of which the number of times of advertising is the least (or the most).

The display control unit 14 performs control to display the advertisement supplied from the selecting unit 13 at the terminal device 20 of the user operating the robot 30. Specifically, this advertisement is displayed at the terminal device 20 of the user by the display control unit 14 transmitting the advertisement to the terminal device 20 of the user operating the robot 30.

### (Physical Configuration of Advertisement Server 10 and Terminal Device 20)

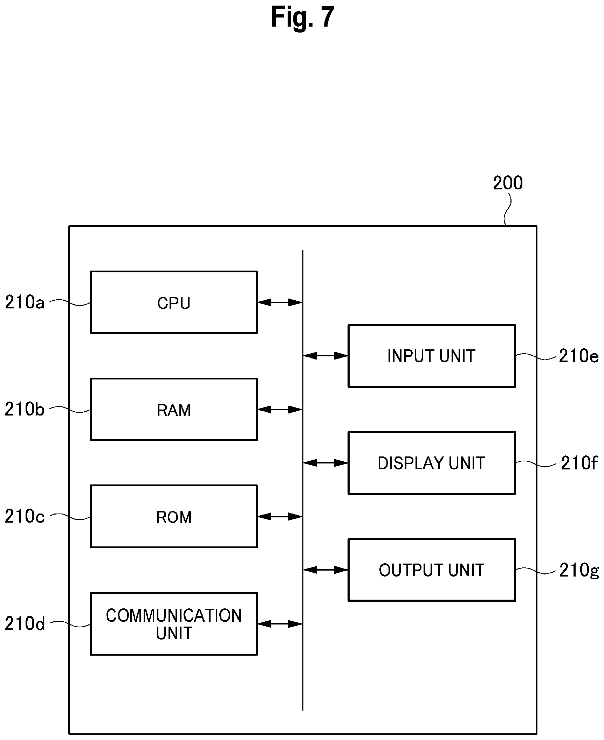

Fig. 7 is a diagram illustrating a hardware configuration of a computer (information processing device) 200 implemented in the advertisement server 10 and the terminal device 20.

The computer 200 has a CPU (Central Processing Unit) 210a that corresponds to a computing unit, RAM (Random Access Memory) 210b that corresponds to a storage unit, ROM (Read only Memory) 210c that corresponds to a storage unit, a communication unit 210d, an input unit 210e, a display unit 210f, and an output unit 210g. These configurations are connected via a bus so as to be capable of mutually exchanging data. Note that in the present example, a case of the computer 200 being made up of one computer is described, but the computer 200 may be realized by a combination of a plurality of computers. Also, the configuration illustrated in Fig. 7 is an example, and the computer 200 may have configurations other than these, or may not have part of these configurations.

The CPU 210a is a control unit for performing control relating to execution of programs stored in the RAM 210b or the ROM 210c, and computing and processing of data. The CPU 210a is a computing unit that executes programs for performing advertisement display (advertisement control programs) using the robot 30. The CPU 210a receives various types of data from the input unit 210e and the communication unit 210d, displays computation results of data on the display unit 210f, performs audio output thereof from the output unit 210g, and performs storage thereof in the RAM 210b.

The RAM 210b is a storage unit of which data is rewritable, and may be made up of a semiconductor storage device, for example. The RAM 210b may store data of various types of programs that the CPU 210a executes. Note that these are exemplary, and that the RAM 210b may store data other than these, and part of these do not have to be stored.

The ROM 210c is a storage unit of which data can be read out, and may be made up of a semiconductor storage device, for example. The ROM 210c may store advertisement control programs, and data that is not rewritten, for example.

The communication unit 210d is an interface for connecting the computer 200 to other equipment via the network N.

The input unit 210e is for accepting input of data from the user, and may include, for example, a keyboard and a touch panel. The input unit 210e may also include a microphone for speech input.

The display unit 210f is for visually displaying results of computation by the CPU 210a, and may be made up of an LCD (Liquid Crystal Display), for example. The display unit 210f may display images shot by the camera of the robot 30, advertisements, and so forth.

The output unit 210g is for outputting audio, and may include an audio decoder and a speaker, for example.

The advertisement control programs may be provided being stored in a computer-readable storage medium such as the RAM 210b or the ROM 210c or the like, or may be provided via the network N to which connection is made by the communication unit 210d. The computer 200 realizes the functions of displaying advertisements using the robot 30, by the CPU 210a executing the advertisement control programs. Note that these physical configurations are exemplary, and do not necessarily have to be independent configurations. For example, the computer 200 may include an LSI (Large-Scale Integration) chip in which the CPU 210a, the RAM 210b, and the ROM 210c are integrated.

### (Physical Configuration of Robot 30)

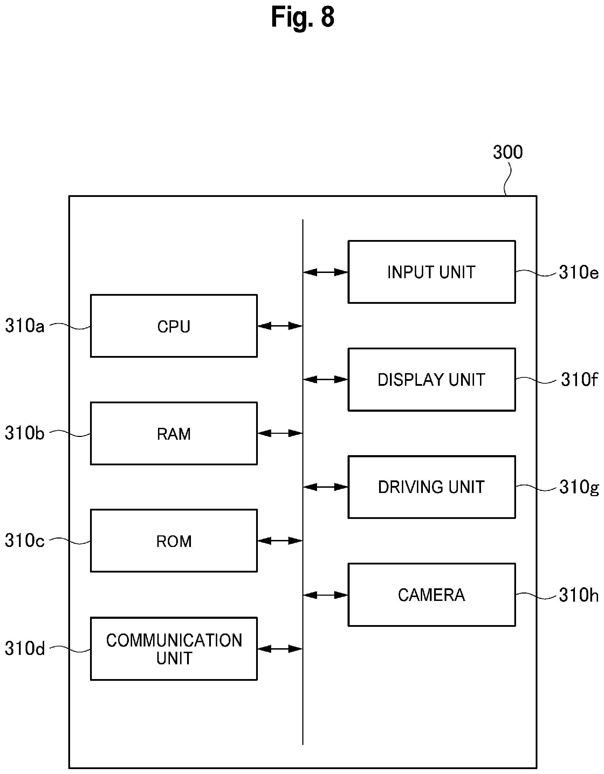

Fig. 8 is a diagram illustrating a hardware configuration of a computer (information processing device) 300 implemented in the robot 30.

The computer 300 has a CPU 310a that corresponds to a computing unit, RAM 310b that corresponds to a storage unit, ROM 310c that corresponds to a storage unit, a communication unit 310d, an input unit 310e, a display unit 310f, a driving unit 310g, and a camera 310h. These configurations are connected via a bus so as to be capable of mutually exchanging data. Note that the configuration illustrated in Fig. 8 is an example, and the computer 300 may have configurations other than these, or may not have part of these configurations.

The CPU 310a is a control unit for performing control relating to execution of programs stored in the RAM 310b or the ROM 310c, and computing and processing of data. The CPU 310a is a computing unit that executes programs for performing advertisement display (advertisement control programs) using the robot 30. The CPU 310a receives various types of data from the input unit 310e and the communication unit 310d, displays computation results of data on the display unit 310f, and performs storage thereof in the RAM 310b. The CPU 310a also controls the driving unit 310g and controls actions of the robot 30.

The RAM 310b is a storage unit of which data is rewritable, and may be made up of a semiconductor storage device, for example. The RAM 310b may store various types of programs that the CPU 310a executes. Note that these are exemplary, and that the RAM 310b may store data other than these, and part of these do not have to be stored.

The ROM 310c is a storage unit of which data can be read out, and may be made up of a semiconductor storage device, for example. The ROM 310c may store advertisement control programs, and data that is not rewritten, for example.

The communication unit 310d is an interface for connecting the robot 30 to other equipment via the network N.

The input unit 310e is for accepting input of data from the user, and may include a touch panel, for example. The input unit 310e may also include a microphone for speech input.

The display unit 310f is for visually displaying results of computation by the CPU 310a, and may be made up of an LCD, for example. In a case in which the terminal device 20 includes a camera, the display unit 310f may display images shot by the camera of the terminal device 20.

The driving unit 310g includes actuators that are remotely operable, and includes traveling units such as wheels and so forth, and a manipulator and so forth. In a case in which the robot 30 is a traveling-type robot, the driving unit 310g includes at least traveling units such as wheels and so forth, and may also include a manipulator. In a case in which the robot 30 is a worn-type, the driving unit 310g includes at least a manipulator.

The camera 310h includes an image-capturing device that performs image-capturing of still images or moving images, and transmits the still images or moving images that are image-captured to the display unit 310f and the terminal device 20 via the communication unit 310d.

The advertisement control programs may be provided being stored in a computer-readable storage medium such as the RAM 310b or the ROM 310c or the like, or may be provided via the network N to which connection is made by the communication unit 310d. In the robot 30, the CPU 310a realizes the functions that are necessary for displaying advertisements using the robot 30, by executing the advertisement control programs. Note that these physical configurations are exemplary, and do not necessarily have to be independent configurations. For example, the robot 30 may include an LSI chip in which the CPU 310a, the RAM 310b, and the ROM 310c are integrated.

### Processing Flowchart

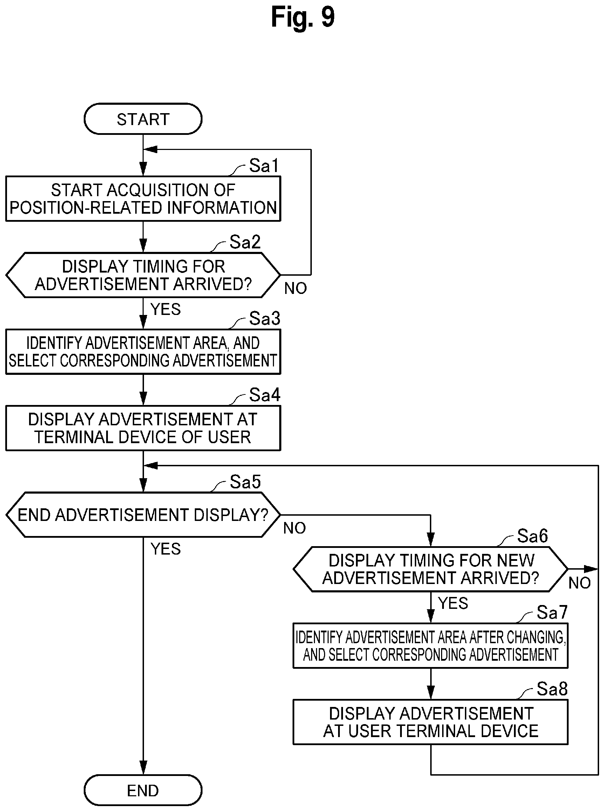

Fig. 9 is a flowchart showing an example of processing executed by the advertisement server 10 according to the present embodiment. This processing is realized by the advertisement server 10 executing advertisement control programs or the like. As a prerequisite, a case will be assumed in which the user is permitted to remotely operate the robot 30 installed in the shopping mall by using the terminal device 20, and an advertisement display such as described with reference to Fig. 2 is performed.

The user causes the robot 30 installed in the shopping mall to travel toward a favorite sporting goods shop by operating the robot 30 using the terminal device 20.

The acquisition unit 12 of the advertisement server 10 starts acquisition of position-related information of the robot 30 (step Sa1). The advertisement server 10 determines whether or not a timing for displaying one of the advertisements has arrived, on the basis of the position-related information of the robot (step Sa2). Specifically, the selecting unit 13 of the advertisement server 10 determines whether or not the current position of the robot 30 indicated by the position-related information has entered one of the advertisement areas stored in the advertisement database DB2.

In a case that the current position of the robot 30 is not in any one of the advertisement areas, the advertisement server 10 determines that a timing for displaying one of the advertisements has not arrived (step Sa2; NO), and returns to step Sa1.

Conversely, in a case that the current position of the robot 30 is in one of the advertisement areas, the advertisement server 10 determines that a timing for displaying an advertisement has arrived (step Sa2; YES), and advances to step Sa3.

Upon advancing to step Sa3, the selecting unit 13 of the advertisement server 10 identifies the advertisement area that the robot 30 has entered, (e.g., advertisement area Ar1), selects an advertisement correlated with that advertisement area from the advertisement database DB2, and also sends the advertisement to the display control unit 14.

The display control unit 14 transmits the selected advertisement to the terminal device 20 of the user operating the robot 30, and displays this advertisement at the terminal device 20 of the user (step Sa4).

Thereafter, the advertisement server 10 determines whether or not the advertisement display at the terminal device 20 should be ended (step Sa5). As an example, the advertisement server 10 determines whether or not the user has ended remote operation of the robot 30. In a case in which the user has ended remote operation of the robot 30, the advertisement server 10 determines that the advertisement display at the terminal device 20 should be ended (step Sa5; YES), and ends the processing.

Conversely, in a case in which the user has not ended remote operation of the robot 30, the advertisement server 10 determines that the advertisement display at the terminal device 20 should not be ended (step Sa5; NO), and advances to step Sa6.

Upon advancing to step Sa6, the advertisement server 10 determines whether or not a timing for displaying a new advertisement has arrived. Specifically, the selecting unit 13 of the advertisement server 10 determines whether or not the advertisement area has changed, in accordance with change in the position-related information supplied from the acquisition unit 12. In a case in which the advertisement area has not changed, the selecting unit 13 determines that a timing for displaying a new advertisement has not arrived (step Sa6; NO), and returns to step Sa5.

Conversely, in a case in which the advertisement area has changed, the selecting unit 13 determines that a timing for displaying a new advertisement has arrived (step Sa6; YES), and advances to step Sa7.

Upon advancing to step Sa7, the selecting unit 13 identifies the advertisement area after changing, (e.g., advertisement area Ar2), selects an advertisement correlated with that advertisement area from the advertisement database DB2, and also sends the advertisement to the display control unit 14.

The display control unit 14 transmits the selected advertisement to the terminal device 20 of the user operating the robot 30, and displays this advertisement at the terminal device 20 of the user (step Sa8). The advertisement server 10 then returns to step Sa5, and determines whether or not the advertisement display at the terminal device 20 should be ended. Note that actions thereafter have already been described above, and accordingly will be omitted here.

As described above, according to the present embodiment, an advertisement is displayed at the terminal device 20 of a user that has remotely visited a shop, in accordance with the position of the robot 30. The user can acquire advertisements for merchandise or the like that he/she is interested in, extremely easily and quickly, in accordance with the position of the robot 30 that is the other self of the user. Conversely, the shop side can efficiently provide advertisements to users interested in the merchandise or the like, and thus can take advantage of opportunities to sell merchandise in a sure manner, and lead this to sales.

### B. Modification

In the present embodiment described above, advertisements to be displayed are selected on the basis of position-related information of the robot 30. Conversely, a modification differs from this with respect to the point that advertisements to be displayed are selected using user attribute information and robot operation history information of the user, not just the position-related information of the robot 30.

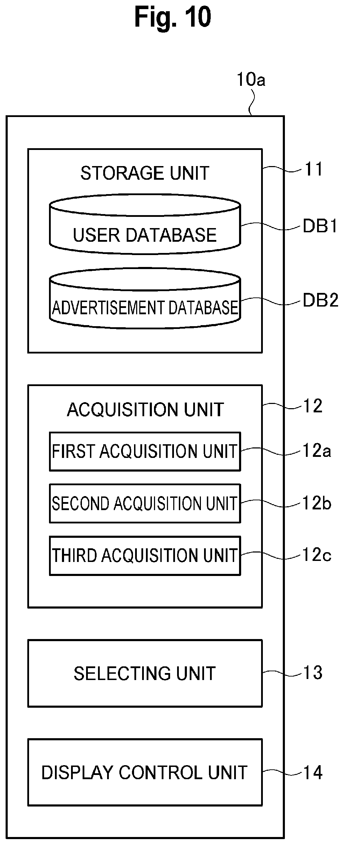

Fig. 10 is a block diagram illustrating a functional configuration of an advertisement server 10a according to the modification. The advertisement server 10a illustrated in Fig. 10 differs from the advertisement server 10 illustrated in Fig. 4 with respect to the point of including a first acquisition unit 12a, a second acquisition unit 12b, and a third acquisition unit 12c. Other configurations are the same, and accordingly corresponding portions are denoted by the same signs, and detailed description thereof will be omitted.

As illustrated in Fig. 10, the acquisition unit 12 is made up including the first acquisition unit 12a, the second acquisition unit 12b, and the third acquisition unit 12c.

The first acquisition unit 12a acquires position-related information relating to the current position of the robot 30, in the same way as the acquisition unit 12 according to the preset embodiment.

The second acquisition unit 12b acquires user attribute information by referencing the user information registered in the user database DB1 (see Fig. 5). The user attribute information includes name of the user, gender, age and family makeup, address, contact, workplace, income, hobbies, preferences, and so forth, as described earlier. The second acquisition unit 12b may acquire just part of the user attribute information (e.g., age and gender, etc.), or may acquire all thereof.

The third acquisition unit 12c acquires robot operation history information by referencing the user information registered in the user database DB1 (see Fig. 5). As described earlier, the robot operation history information includes information representing the robot ID for identifying the robot 30 that the user has operated, date and time, and location of using the robot 30, contents realized by operating the robot 30 (e.g., purchasing particular merchandise or the like), and so forth. The third acquisition unit 12c may acquire just part of the robot operation history information (e.g., contents realized by operating the robot 30, etc.), or may acquire all thereof.

The acquisition unit 12 supplies the position-related information, user attribute information, and robot operation history information, acquired in this way, to the selecting unit 13.

The selecting unit 13 selects advertisements to be displayed on the basis of the position-related information, user attribute information, and robot operation history information, supplied from the acquisition unit 12. As an example, the selecting unit 13 selects advertisements to display using (1) position-related information and user attribute information, or (2) position-related information and robot operation history information, or alternatively (3) position-related information and user attribute information and robot operation history information. For example, in a case in which it is found from the position-related information that the robot 30 has entered a particular advertisement area (e.g., a sporting goods floor), and it is found from the robot operation history information that particular merchandise (e.g., training goods) was purchased at the previous time of operating the robot 30, an advertisement recommending training wear is selected from the advertisement database DB2. Thus, selecting advertisements using not only the position-related information of the robot 30, but also user attribute information and robot operation history information of the user as well, enables more appropriate advertisements to be displayed at the terminal device 20 of the user at more appropriate timings.

The present embodiment and modification described above are for facilitating understanding of the present invention, and should not be used to restrictively interpret the present invention. The elements and the layout, materials, conditions, shapes, sizes, and so forth thereof are not limited to those exemplified, and can be changed as appropriate. Also, the elements can be partially substituted or combined with each other.

Further, in the present embodiment and modification, the term "unit" does not simply mean physical means, and also includes cases in which functions that the "unit" has are realized by software. Also, functions that one "unit" or device has may be realized by two or more physical means or devices, and functions that two or more "units" or devices have may be realized by one physical means or device.

### Reference Signs List

- 1: Advertisement system
- 10, 10a: Advertisement server
- 11: Storage unit
- 12: Acquisition unit
- 12a: First acquisition unit
- 12b: Second acquisition unit
- 12c: Third acquisition unit
- 13: Selecting unit
- 14: Display control unit
- 20: Terminal device
- 30: Robot
- DB1: User database
- DB2: Advertisement database

## Claims

1. An information processing device, comprising:
a storage unit that stores a plurality of advertisements;
a first acquisition unit that acquires position-related information relating to a position of a robot that is not fixed;
a selecting unit that selects, from a plurality of the advertisements, an advertisement to be displayed, on the basis of the position-related information; and
a display control unit that performs control to display the advertisement that is selected, at a terminal device used by a user operating the robot.

2. The information processing device according to claim 1, wherein
the selecting unit,
in accordance with change in the position-related information, selects a new advertisement in accordance with the position-related information after changing.

3. The information processing device according to claim 1 or 2, wherein
an image shot by a camera of the robot is displayed at the terminal device, and
the display control unit
performs control to display the advertisement, which is selected, at the terminal device in a manner superimposed on the image.

4. The information processing device according to any one of claims 1 to 3, further comprising
a second acquisition unit that acquires user attribute information representing attributes of the user, wherein
the selecting unit
selects the advertisement on the basis of the position-related information and the user attribute information.

5. The information processing device according to any one of claims 1 to 3, further comprising
a third acquisition unit that acquires robot operation history information representing operation history of the robot by the user, wherein
the selecting unit
selects the advertisement in accordance with the position-related information and the robot operation history information.

6. An information processing method, comprising the steps of:
a computer including a storage unit that stores a plurality of advertisements
acquiring position-related information relating to a position of a robot that is not fixed;
selecting, from a plurality of the advertisements, an advertisement to be displayed, on the basis of the position-related information; and
performing control of displaying the advertisement that is selected, at a terminal device used by a user operating the robot.

7. A program that causes a computer including a storage unit that stores a plurality of advertisements to execute the steps of:
acquiring position-related information relating to a position of a robot that is not fixed;
selecting, from a plurality of the advertisements, an advertisement to be displayed, on the basis of the position-related information; and
performing control of displaying the advertisement that is selected, at a terminal device used by a user operating the robot.
